(19) Europäisches Patentamt
European Patent Office
Office européen des brevets

(11) **EP 3 605 026 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(51) Int Cl.:
***G01D 5/38*** *(2006.01)*

(21) Anmeldenummer: **19186786.0**

(22) Anmeldetag: **17.07.2019**

(54) **OPTISCHE POSITIONSMESSEINRICHTUNG**

OPTICAL POSITIONING DEVICE

DISPOSITIF OPTIQUE DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2018 DE 102018212719**

(43) Veröffentlichungstag der Anmeldung:
**05.02.2020 Patentblatt 2020/06**

(73) Patentinhaber: **Dr. Johannes Heidenhain GmbH 83301 Traunreut (DE)**

(72) Erfinder:
• **SÄNDIG, Karsten**
**83349 Palling (DE)**
• **HUBER, Walter**
**83278 Traunstein (DE)**

(56) Entgegenhaltungen:
EP-A2- 1 901 041         EP-A2- 2 765 394
DE-A1-102008 007 319   DE-A1-102013 206 693

**Beschreibung**

## GEBIET DER TECHNIK

Die vorliegende Erfindung betrifft eine optische Positionsmesseinrichtung, die zur hochgenauen Bestimmung der Relativposition zweier zueinander beweglicher Objekte geeignet ist.

## STAND DER TECHNIK

Aus dem Stand der Technik sind optische Positionsmesseinrichtungen bekannt, die als sogenannte 3-Gitter-Messsysteme ausgebildet sind. Diese dienen zur interferentiellen Bestimmung des Relativabstands von zwei Objekten, die entlang mindestens einer Messrichtung zueinander beweglich sind. Hierbei durchlaufen Teilstrahlenbündel, die aus einem von einer Lichtquelle emittierten Strahlenbündel aufgespalten werden, getrennte Strahlwege und beaufschlagen ein oder mehrere Gitter. Die Teilstrahlenbündel erfahren dabei abstandsabhängige Phasenverschiebungen, bevor sie auf einem Vereinigungselement zur interferierenden Überlagerung gelangen. Nach der Wieder-Überlagerung propagieren dann mindestens drei Paare interferierender Teilstrahlenbündel in verschiedene Raumrichtungen weiter und werden mit Hilfe eines Fokussierelements auf je ein Detektorelement fokussiert, so dass über die Detektorelemente mindestens drei positionsabhängige, phasenverschobene Inkrementalsignale erfassbar sind.

Als Vereinigungselement fungiert in derartigen Positionsmesseinrichtungen üblicherweise das letzte durchlaufene Gitter im Abtaststrahlengang. Dieses Gitter ist zumeist als lineares Transmissions-Phasengitter mit einer konstanten Ortsfrequenz ausgebildet. Über das Vereinigungselement werden die gewünschten Phasenverschiebungen bzw. -beziehungen zwischen den paarweise interferierenden Beugungsordnungen eingestellt, wozu in der Regel die Gitterparameter Stegbreite und Phasenhub des Transmissions-Phasengitters geeignet gewählt werden; diesbezüglich sei z.B. auf die EP 163 362 A1 verwiesen. So können etwa durch die Wahl geeigneter Gitterparameter um jeweils 120° phasenversetzte Inkrementalsignale auf drei Detektorelementen erzeugt werden, die auf paarweise interferierenden Teilstrahlenbündeln in 0./-2. Beugungsordnung, +1./-1. Beugungsordnung sowie 0./+2. Beugungsordnung basieren.

Üblicherweise besitzen in der Praxis die in Richtung der Detektorelemente propagierenden Paare von Teilstrahlenbündeln Durchmesser von mehreren Millimetern. In Verbindung mit der gewählten Gitterkonstante des Vereinigungselements führt dies in vielen Fällen zu einem Abstand zwischen dem Vereinigungselement und den Detektorelementen, der eine Überschreitung der zulässigen Baugröße der entsprechenden Positionsmesseinrichtung zur Folge hätte. Weiterhin ist zu beachten, dass die lichtempfindliche Fläche der einzelnen Detektorelemente jeweils eine bestimmte Mindestgröße aufweisen muss. Dies erweist sich aber als ungünstig im Hinblick auf resultierende Kapazitäten in den Detektorelementen und damit hinsichtlich der Grenzfrequenz der Positionsmesseinrichtung. Um einerseits die Baugröße der Positionsmesseinrichtung kompakt zu halten und andererseits die lichtempfindliche Fläche der Detektorelemente möglichst klein ausführen zu können, ist in derartigen Positionsmesseinrichtung daher dem Vereinigungselement oftmals ein Fokussierelement nachgeordnet, in dessen bildseitiger Brennebene die Detektorelemente angeordnet sind. Üblicherweise ist das Fokussierelement dabei als refraktive Linse ausgebildet, die einen gewissen Platzbedarf erfordert; auch diesbezüglich sei auf die bereits erwähnte EP 163 362 A1 verwiesen.

Die beschriebenen Positionsmesseinrichtungen können hierbei sowohl zur Erfassung von lateralen Relativbewegungen in Form einer relativen Linearverschiebung oder Rotation zweier zueinander beweglicher Objekte eingesetzt werden, wie dies z.B. in der EP 163 362 A1 vorgesehen ist. Ebenso ist es aber auch möglich, dass ein derartiges Messprinzip zur Erfassung von Relativbewegungen entlang einer vertikalen Richtung verwendet wird; in diesem Zusammenhang sei etwa die DE 10 2013 206 693 A1 erwähnt.

In beiden Anwendungen erweist sich jeweils als nachteilig, wenn in der entsprechenden Positionsmesseinrichtung das erforderliche Fokussierelement ein zu großes Bauvolumen benötigt und/oder insgesamt zu viele einzelne Komponenten bei der Montage zueinander justiert werden müssen.

Aus der DE 10 2008 007 319 A1 ist eine optische Positionsmessinrichtung, basierend auf einem interferentiellen Abtastprinzip bekannt, bei der aufgespaltene Teilstrahlenbündel auf getrennten Strahlwegen ein oder mehrere Gitter beaufschlagen und dabei abstandsabhängige Phasenverschiebungen erfahren. Nach der Wieder-Überlagerung an einem Mischgitter propagieren drei Paare interferierender Teilstrahlenbündel in Richtung mehrerer Detektorelemente, über die phasenverschobene Inkrementalsignale erfassbar sind. Zur Fokussierung auf die Detektorelemente ist auch hier eine Fokussieroptik in Form einer Linse vorgesehen.

Die Druckschrift EP 2 765 394 A2 offenbart eine optische Positionsmesseinrichtung mit einem passiven Faser-Abtastkopf. Die von einer Reflexions-Maßverkörperung zurückreflektierten Teilstrahlenbündel werden mit Hilfe eines Gitters in die Einkoppelebene einer Lichtleitfaser fokussiert.

**ZUSAMMENFASSUNG DER ERFINDUNG**

Der vorliegenden Erfindung liegt die Aufgabe zugrunde, eine optische Positionsmesseinrichtung der eingangs beschriebenen Art anzugeben, die kompakt bauend ausgebildet ist und einen möglichst geringen Aufwand bei der Justage der verschiedenen Komponenten erfordert.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung dient zur interferentiellen Bestimmung des Relativabstands von zwei Objekten, die entlang mindestens einer Messrichtung zueinander beweglich sind. Hierbei wird ein von einer Lichtquelle emittiertes Strahlenbündel in mindestens zwei Teilstrahlenbündel aufgespalten, die anschließend auf getrennten Strahlwegen ein oder mehrere Gitter beaufschlagen und dabei abstandsabhängige Phasenverschiebungen erfahren. Die Teilstrahlenbündel werden an einem Mischgitter überlagert, dann propagieren mindestens drei Paare interferierender Teilstrahlenbündel in verschiedene Raumrichtungen, wobei über das Mischgitter ferner eine Fokussierung jedes Paares mit interferierenden Teilstrahlenbündeln auf ein Detektorelement erfolgt, so dass über die Detektorelemente mindestens drei positionsabhängige, phasenverschobene Inkrementalsignale erfassbar sind. Das Mischgitter ist dabei als n-stufiges Transmissions-Phasengitter ausgebildet, für dessen Stufenhöhe (h) gilt:

$$h = \lambda / (n \cdot (n1 - n2))$$

mit:

h := Stufenhöhe
$\lambda$ := Lichtwellenlänge
n := 2, 3, 4, .....
n1 := Brechungsindex der Gitterstege
n2 := Brechungsindex der Gitterlücken

Dabei kann vorgesehen sein, dass zwei auf das Mischgitter einfallende Teilstrahlenbündel mindestens eine Beugung in 0., +/- 1. und +/- 2. Beugungsordnung erfahren und in Richtung der Detektorelemente paarweise interferierende Teilstrahlenbündel 0./-2. Beugungsordnung, +1./-1. Beugungsordnung und 0./+2 Beugungsordnung propagieren.

Dabei kann das Mischgitter als n-stufiges Transmissions-Phasengitter ausgebildet sein, welches eine Phasenfunktion $\varphi$ (x, y) gemäß

$$\varphi(x, y) = \frac{2\pi}{n} Round \left( \frac{n*atan2(Im(T(x,y)), Re(T(x,y)))}{2\pi} \right)$$

besitzt, mit:

$\varphi$ (x, y) := Phasenfunktion des Transmissions-Phasengitters
x, y := Ortskoordinaten in der Ebene des Transmissions-Phasengitters
n := 2, 3, 4,...; Anzahl der Stufen des Transmissions-Phasengitters
T (x, y) := Transmissionsfunktion des Mischgitters

In einer möglichen Ausführungsform ist vorgesehen, dass

- eines der beiden Objekte mit einem planen Messreflektor verbunden ist,
- das andere Objekt mit einer Abtasteinheit verbunden und entlang einer Messrichtung (z) relativ beweglich zum Messreflektor angeordnet ist, wobei die Messrichtung (z) senkrecht zum Messreflektor orientiert ist und
- wobei die Abtasteinheit folgende Komponenten aufweist:

    - mindestens eine Lichtquelle,
    - mehrere Detektorelemente,
    - das Mischgitter,
    - mehrere Umlenkelemente, die jeweils als eindimensionales Reflexionsgitter ausgebildet sind sowie

- mindestens ein Aufspaltelement, welches als eindimensionales Transmissionsgitter ausgebildet ist.

Dabei ist es möglich, dass die Abtasteinheit einen transparenten Trägerkörper mit pyramidenstumpfförmigem Querschnitt aufweist, an dessen dem Messreflektor zugewandten Fläche das Aufspaltelement angeordnet ist und an dessen Seitenflächen die mindestens vier Umlenkelemente angeordnet sind.

Mit Vorteil sind ferner die verschiedenen Komponenten in dieser Ausführungsform derart ausgebildet und angeordnet, dass

- das von der Lichtquelle emittierte Strahlenbündel am Aufspaltelement eine Aufspaltung in zwei Teilstrahlenbündel erfährt und die beiden Teilstrahlenbündel in Richtung des Messreflektors propagieren,
- vom Messreflektor eine Rückreflexion der Teilstrahlenbündel in Richtung der ersten und zweiten Umlenkelemente in der Abtasteinheit erfolgt, wo eine Umlenkung der Teilstrahlenbündel in Richtung der dritten und vierten Umlenkelemente resultiert und
- über die dritten und vierten Umlenkelemente eine Umlenkung der Teilstrahlenbündel zum Messreflektor erfolgt,
- von dem aus eine Rückreflexion der Teilstrahlenbündel in Richtung des Mischgitters in der Abtasteinheit resultiert, an dem eine Überlagerung der Teilstrahlenbündel erfolgt und dann drei Paare interferierender Teilstrahlenbündel in verschiedenen Raumrichtungen auf drei Detektorelemente fokussiert werden.

In einer weiteren Ausführungsform kann vorgesehen sein, dass

- eines der beiden Objekte mit einer Maßverkörperung verbunden ist,
- das andere Objekt mit einer Abtasteinheit verbunden und entlang einer Messrichtung (x) relativ beweglich zur Maßverkörperung angeordnet ist, wobei die Messrichtung (x) parallel zur Maßverkörperungsebene orientiert ist und
- wobei die Abtasteinheit folgende Komponenten aufweist:

  - mindestens eine Lichtquelle,
  - mehrere Detektorelemente,
  - das Mischgitter,
  - mehrere Abtastgitter, die jeweils als eindimensionales Transmissionsgitter ausgebildet sind.

Dabei ist es möglich, dass die Abtasteinheit ferner eine transparente Abtastplatte aufweist, auf deren Ober- und/oder Unterseite das Mischgitter und/oder die Abtastgitter angeordnet sind.

Ferner können dabei auf der Oberseite der Abtastplatte ein oder mehrere Reflektorelemente angeordnet sein, deren reflektierende Seite jeweils in Richtung der Maßverkörperung orientiert ist und auf der Unterseite das Mischgitter sowie die Abtastgitter angeordnet sind.

Maßgeblich für die vorliegende Erfindung ist demnach, ein Mischgitter im Abtaststrahlengang vorzusehen, welche die phasenschiebenden Eigenschaften des Vereinigungselements mit den abbildenden Eigenschaften des Fokussierelements kombiniert. Im Unterschied zum Stand der Technik mit den zwei erforderlichen Komponenten Vereinigungselement und Fokussierelement ist nunmehr mit dem Mischgitter nur noch ein einziges Bauelement in Form eines diffraktiven Bauteils in der erfindungsgemäßen Positionsmesseinrichtung vorgesehen. Auf diese Art und Weise kann eine Verringerung der Baugröße der entsprechenden Positionsmesseinrichtung und eine Minimierung der Anzahl an Komponenten ebenso sichergestellt werden wie eine vereinfachte Justage der erforderlichen optischen Bauteile. Die geringere Anzahl von Komponenten ermöglicht damit neben einer Kostenreduzierung auch eine Verringerung der Masse der entsprechenden Positionsmesseinrichtung.

Das erfindungsgemäß verwendete Mischgitter gestattet ferner die optimierte Anpassung der erforderlichen optischen Eigenschaften an die jeweilige Abtastung; so kann darüber etwa die gewünschte Fokusposition in der Detektionsebene über die Wahl einer geeigneten Brennweite des Mischgitters passend eingestellt werden.

Es ist möglich, die erfindungsgemäße Positionsmesseinrichtung zur Erfassung von lateralen Relativbewegungen zweier beweglicher Objekte einzusetzen, die z.B. relativ zueinander verschiebbar oder verdrehbar angeordnet sind. Desweiteren kann mit Hilfe der erfindungsgemäßen Positionsmesseinrichtung aber auch die Erfassung von Relativbewegungen zweier Objekte entlang einer vertikalen Richtung vorgesehen sein.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1a        eine schematische Darstellung von Strahlengängen im Bereich des Mischgitters und der Detektorelemente einer erfindungsgemäßen Positionsmesseinrichtung in der xz-Ebene;

Figur 1b        eine weitere schematische Darstellung der Strahlengänge im Bereich des Mischgitters und der Detektorelemente einer erfindungsgemäßen Positionsmesseinrichtung in der yz-Ebene;

Figur 2a        eine schematisierte Draufsicht auf ein mehrstufiges, lineares Transmissions-Phasengitter zur Einstellung definierter Phasenverschiebungen zwischen paarweise interferierenden Beugungsordnungen;

Figur 2b        eine schematisierte Draufsicht auf ein mehrstufiges, rotationssymmetrisches Transmissions-Phasengitter mit fokussierender Wirkung;

Figur 2c        eine schematisierte Draufsicht auf ein geeignetes Mischgitter für eine erfindungsgemäße Positionsmesseinrichtung, ausgebildet als mehrstufiges Transmissions-Phasengitter, resultierend aus der Überlagerung der Transmissions-Phasengitter aus den Figuren 2a und 2b;

Figur 2d        eine Schnittdarstellung des Mischgitters aus Figur 2c entlang der x-Richtung zur Veranschaulichung des Phasenverlaufs;

Figur 3         eine schematisierte Darstellung eines ersten Ausführungsbeispiels der erfindungsgemäßen Positionsmesseinrichtung, ausgebildet zur Erfassung einer vertikalen Relativbewegung, in einer Seitenansicht;

Figur 4a, 4b    jeweils eine schematisierte Darstellung eines zweiten Ausführungsbeispiels der erfindungsgemäßen Positionsmesseinrichtung in unterschiedlichen Schnittebenen, ausgebildet zur Erfassung einer lateralen Relativbewegung;

Figur 5a, 5b    jeweils eine schematisierte Darstellung eines dritten Ausführungsbeispiels der erfindungsgemäßen Positionsmesseinrichtung in unterschiedlichen Schnittebenen, ausgebildet zur Erfassung einer lateralen Relativbewegung.

## BESCHREIBUNG DER AUSFÜHRUNGSFORMEN

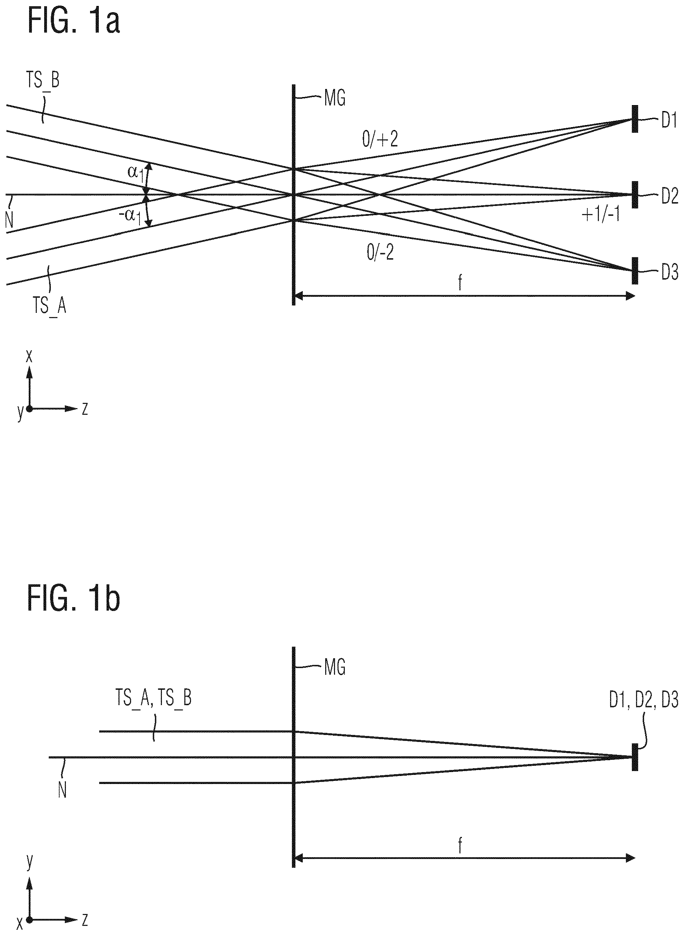

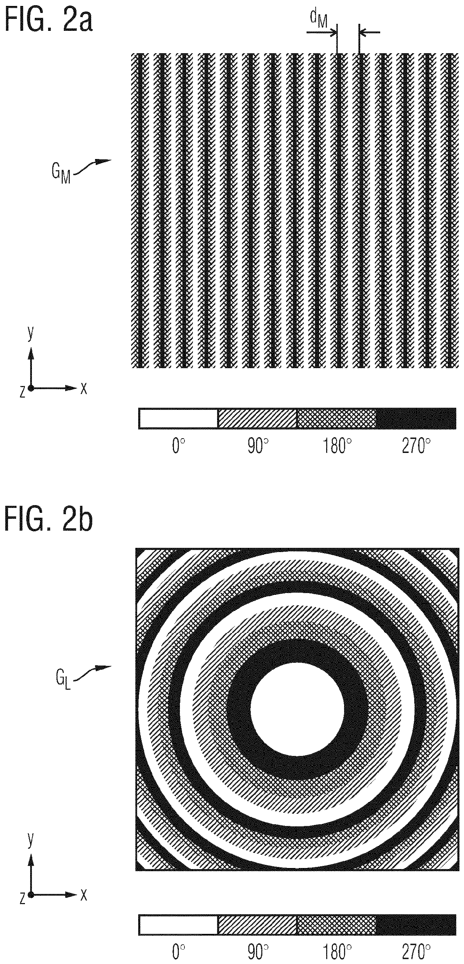

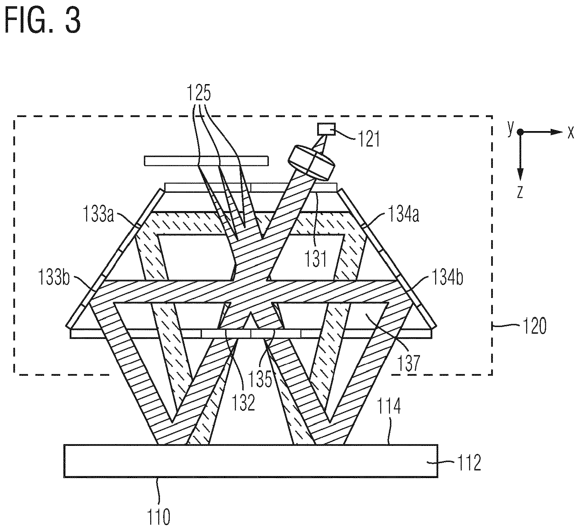

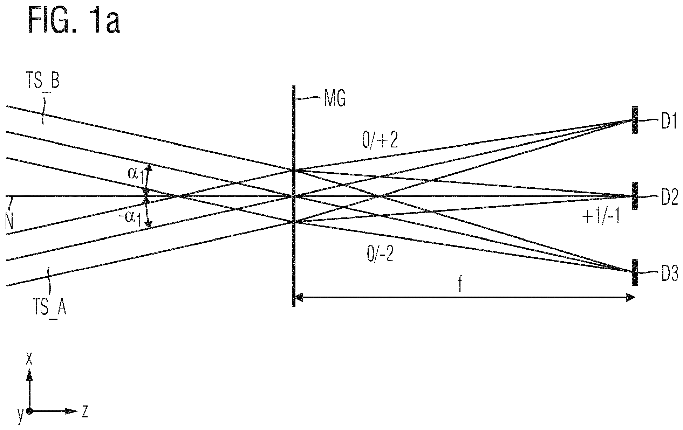

Bevor anhand der Figuren 3, 4a, 4b, 5a und 5b mehrere konkrete Ausführungsbeispiele der erfindungsgemäßen optischen Positionsmesseinrichtung beschrieben werden, die zur interferentiellen Bestimmung des Relativabstands von zwei Objekten geeignet sind, seien zunächst mit Hilfe der Figuren 1a, 1b sowie 2a - 2d verschiedene Überlegungen in Bezug auf das in diesen Vorrichtungen verwendete Mischgitter erläutert. In den Figuren 1a, 1b sind in verschiedenen Schnittebenen jeweils nur die relevanten Strahlengänge von Teilstrahlenbündeln TS_A, TS_B im Bereich des Mischgitters MG und mehrerer Detektorelemente D1, D2, D3 gezeigt. Die Figuren 2a - 2d dienen zur weiteren Erläuterung des Mischgitters MG.

Als Messrichtung fungiert in den Figuren 1a, 1b und 2a - 2d jeweils die mit z bezeichnete Richtung. Mindestens entlang dieser Richtung sind zwei Objekte relativ zueinander bewegbar, die mit verschiedenen Komponenten der erfindungsgemäßen Positionsmesseinrichtung verbunden sind. Bei den beweglichen Objekten kann es sich z.B. um Maschinenteile handeln, deren Relativposition zu bestimmen ist. Beispielsweise ist etwa möglich, dass eine Abtasteinheit der Positionsmesseinrichtung mit einem der beiden Objekte verbunden ist. Die Abtasteinheit umfasst hierbei verschiedene Komponenten wie z.B. eine Lichtquelle, mehrere Detektorelemente sowie ein oder mehrere Gitter mit unterschiedlichen Funktionen. Mit dem anderen Objekt ist ein Messreflektor oder eine Maßverkörperung der Positionsmesseinrichtung verbunden. Die mit Hilfe der erfindungsgemäßen Positionsmesseinrichtung erzeugten, positionsabhängigen und phasenverschobenen Inkrementalsignale können beispielsweise von einer Maschinensteuerung weiterverarbeitet werden, um die Positionierung der entsprechenden Maschinenteile zu steuern.

Entscheidend für die vorliegende Erfindung ist, bestimmte optische Funktionalitäten, die vormals in separaten Bauteilen der optischen Positionsmesseinrichtung implementiert wurden, nunmehr in einem einzigen Mischgitter MG zu kombinieren, das als diffraktives Bauteil ausgebildet ist. Das heißt, die phasenschiebenden Wirkungen eines Vereinigungselements und die fokussierende Wirkung eines Fokussierelements auf die Teilstrahlenbündel TS_A, TS_B werden gemäß der vorliegenden Erfindung im Mischgitter MG kombiniert. Wie nachfolgend noch im Detail erläutert wird, ist das in Figur 1a und 1b nur schematisch angedeutete Mischgitter MG in einer bevorzugten Ausführungsform als mehrstufiges Transmissions-Phasengitter ausgebildet.

Anhand der Figuren 1a, 1b wird im folgenden für den Fall des symmetrischen Einfalls der beiden Teilstrahlenbündel TS_A, TS_B die Ausbildung eines geeigneten Mischgitters MG erläutert. Die beiden Teilstrahlenbündel TS_A, TS_B fallen nach dem Durchlaufen des - nicht in diesen Figuren dargestellten Abtaststrahlengangs - unter den Einfallswinkeln +/- $\alpha_1$ gegenüber der Normalen N auf das Mischgitter MG ein; der Einfachheit halber sei nachfolgend lediglich von den betragsgleichen Einfallswinkeln +/- $\alpha$ die Rede. Weiterhin sei vorausgesetzt, dass die am Mischgitter MG resultierende +1. Beugungsordnung des Teilstrahlenbündels TS_A und die - 1. Beugungsordnung des Teilstrahlenbündels TS_B jeweils senkrecht aus dem Mischgitter MG austreten und dann überlagert miteinander in Richtung des zentral angeordneten Detektorelements D2 weiterpropagieren. Desweiteren propagieren die 0. Beugungsordnung des Teilstrahlenbündels TS_A und die +2. Beugungsordnung des Teilstrahlenbündels TS_B miteinander überlagert zum Detektorelement D1; die 0. Beugungsordnung des Teilstrahlenbündels TS_B und die -2. Beugungsordnung des Teilstrahlenbündels TS_A propagieren miteinander überlagert zum Detektorelement D3. Das Mischgitter MG liefert demzufolge in Transmission mindestens eine 0. Beugungsordnung sowie +/- 1. und +/- 2. Beugungsordnungen der darauf einfallenden Teilstrahlenbündel TS_A, TS_B.

Im Fall einer derartigen Überlagerung der verschiedenen Beugungsordnungen muss ein hierzu verwendetes Gitter $G_M$ dann eine Gitterperiode $d_M$ aufweisen, für die gilt:

$$d_M = \frac{\lambda}{\sin \alpha} \qquad \text{(Gl. 1)}$$

mit

$d_M$ := Gitterperiode eines Gitters $G_M$, welches 0. sowie +/- 1. und +/- 2. Beugungsordnungen liefert
$\lambda$ := Lichtwellenlänge
$\alpha$ := Einfallswinkel der Teilstrahlenbündel, die auf das Gitter $G_M$ einfallen

Eine entsprechendes lineares Gitter $G_M$, ausgebildet als vierstufiges Transmissions-Phasengitter, das die Gitterperiode $d_M$ aufweist, ist in Figur 2a in einer schematisierten Draufsicht gezeigt. Pro Gitterperiode $d_M$ sind hier vier in x-Richtung aufeinanderfolgend angeordnete Gitterbereiche vorgesehen, in denen die durchlaufenden Teilstrahlenbündel jeweils einen unterschiedlichen Phasenversatz erfahren; die vier phasenverschiedenen Gitterbereiche sind in Figur 2a jeweils entsprechend der zugehörigen Legende unterschiedlich dargestellt.

Unter Berücksichtigung der gewünschten Phasenbeziehungen der resultierenden Inkrementalsignale, vorzugsweise in Form einer relativen Phasendifferenz von ca. 120° bei drei Inkrementalsignalen, ergibt sich für die komplexe Transmissionsfunktion $T_M(x)$ des Gitters $G_M$ dann die folgende Beziehung:

$$T_M(x) = 1 + e^{2\pi i \left( \frac{x}{d_M} + \frac{1}{3} \right)} + e^{-2\pi i \left( \frac{x}{d_M} - \frac{1}{3} \right)} + e^{4\pi i \left( \frac{x}{d_M} + \frac{1}{3} \right)} + e^{-4\pi i \left( \frac{x}{d_M} - \frac{1}{3} \right)} \qquad \text{(Gl. 2)}$$

mit

$T_M(x)$ := komplexe Transmissionsfunktion des Gitters $G_M$
x := Ortskoordinate
$d_M$ := Gitterkonstante des Gitters $G_M$

Um die erforderliche Transmissionsfunktion T(x, y) des eigentlichen Mischgitters MG mit der gewünschten Fokussierungs-Funktionalität zu erhalten, muss die komplexe Transmissionsfunktion $T_M(x)$ des Gitters $G_M$ mit der Linsentransmissionsfunktion $T_L(x, y)$ eines geeignet fokussierenden, weiteren Gitters $G_L$ multipliziert werden. Die Linsentransmissionsfunktion $T_L(x, y)$ eines derartigen, fokussierenden Gitters $G_L$ ergibt sich hierbei gemäß nachfolgender Beziehung:

$$T_L(x, y) = e^{-\frac{2\pi i \sqrt{x^2 + y^2 + f^2}}{\lambda}} \qquad \text{(Gl. 3)}$$

mit

$T_L(x, y)$ := Linsentransmissionsfunktion des fokussierenden Gitters $G_L$
x, y := Ortskoordinaten in der Fokusebene
$\lambda$ := Lichtwellenläge

Ein entsprechendes, rotationssymmetrisches Gitter $G_L$ mit den erforderlichen Fokussierungseigenschaften ist in Figur 2b in einer schematischen Draufsicht gezeigt. Das Gitter $G_L$ ist im vorliegenden Beispiel ebenfalls als vierstufiges Transmissions-Phasengitter ausgebildet. Das heißt, pro Gitterperiode sind in radialer Richtung vier aufeinanderfolgend angeordnete Gitterbereiche vorgesehen, in denen die durchlaufenden Teilstrahlenbündel jeweils einen unterschiedlichen Phasenversatz erfahren. Die vier phasenverschiedenen Gitterbereiche sind auch in Figur 2b entsprechend der zugehörigen Legende unterschiedlich dargestellt.

Die erforderliche Transmissionsfunktion T (x, y) des Mischgitters MG, das die optischen Eigenschaften der beiden Gitter $G_M$ und $G_L$ vereint, resultiert dann gemäß

$$T(x, y) = T_M(x) \cdot T_L(x, y) \qquad (Gl.\ 4)$$

mit

T (x, y) := Transmissionsfunktion des Mischgitters MG
$T_M$ (x) := komplexe Transmissionsfunktion des Gitters $G_M$
$T_L$ (x, y) := Linsentransmissionsfunktion des Gitters $G_L$

Gemäß Gleichung 4 besitzt das Mischgitter MG eine Struktur, welche auf die einfallenden Teilstrahlenbündel eine amplituden- und phasenmodulierende Wirkung besitzt. Um den Herstellungsaufwand zu reduzieren, kann ein Mischgitter MG mit den erforderlichen optischen Eigenschaften in einer möglichen Ausführungsform durch ein n-stufiges Phasengitter mit einer Phasenfunktion $\varphi(x,y)$ gemäß nachfolgender Gleichung (5) approximiert werden.

$$\varphi(x, y) = \frac{2\pi}{n} \mathrm{Round}\left(\frac{n * \mathrm{atan2}(\mathrm{Im}(T(x,y)), \mathrm{Re}(T(x,y)))}{2\pi}\right) \qquad (Gl.\ 5)$$

mit:

$\varphi$(x, y) := Phasenfunktion des Mischgitters MG
n := ganzzahlig; Anzahl der verschiedenen Phasengitter-Stufen
T (x, y) := Transmissionsfunktion des Mischgitters MG

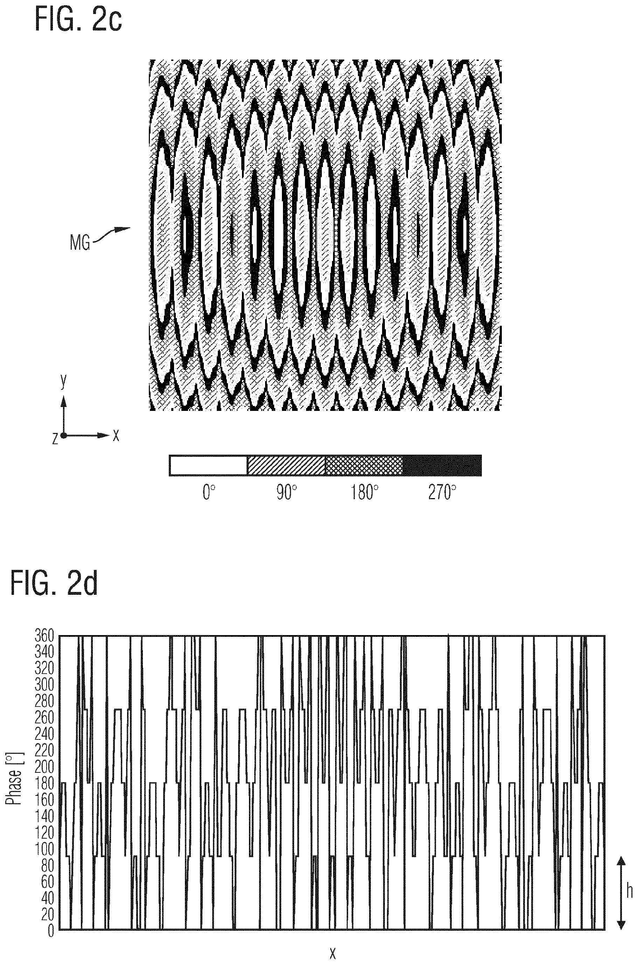

Ein Ausführungsbeispiel eines Mischgitters MG, das auf Grundlage der vorstehenden Überlegungen ausgebildet ist und gleichzeitig die geforderten phasenschiebenden Wirkungen des Vereinigungselements und die fokussierende Wirkung des Fokussierelements aufweist, ist in Figur 2c in einer Draufsicht schematisiert gezeigt. Das dargestellte Mischgitter MG ist als mehrstufiges - konkret: vierstufiges - Transmissions-Phasengitter ausgebildet, wobei die vier verschieden-dargestellten Gitterbereiche in der Figur unterschiedliche phasenschiebende Wirkungen auf die durchtretenden Teilstrahlenbündel aufweisen.

In Figur 2d ist eine Schnittansicht durch das Mischgitter aus Figur 3c entlang der angegebenen x-Richtung gezeigt. Deutlich ersichtlich sind hierbei die vier vorgesehenen Phasenstufen und der entlang der x-Richtung vorgesehene Phasenverlauf des Mischgitters MG. Neben ersten Gitterbereichen mit einer Stufenhöhe h gibt es weitere Gitterbereiche, die jeweils Stufenhöhen 2h, 3h und 4h aufweisen.

Allgemein gilt im Fall eines n-stufigen Transmissions-Phasengitters für die Stufenhöhe h:

$$h = \lambda\ /\ (n \cdot (n1 - n2)) \qquad (Gl.\ 6)$$

mit:

h := Stufenhöhe
$\lambda$ := Lichtwellenlänge
n := 2, 3, 4, .....
n1 := Brechungsindex der Gitterstege
n2 := Brechungsindex der Gitterlücken

Alternativ zur Ausbildung als Transmissions-Phasengitter wäre es grundsätzlich auch möglich, das Mischgitter als Reflexions-Phasengitter auszuführen. Besonders geeignet hierzu wären etwa hochreflektierende Materialien wie z.B. Gold oder Aluminium. In einem solchen Fall gilt dann für die Stufenhöhe h eines n-stufigen Reflexions-Phasengitters:

$$h = \lambda / (2 \cdot n) \qquad \text{(Gl. 7)}$$

mit:

h := Stufenhöhe
$\lambda$ := Lichtwellenlänge
n = : 2, 3, 4, ....

Desweiteren wäre es auch grundsätzlich möglich, das Mischgitter als stufenloses Gitter oder als Sägezahngitter auszubilden.

Ein erstes konkretes Ausführungsbeispiel einer erfindungsgemäßen optischen Positionsmesseinrichtung, in der ein diffraktives Mischgitter mit den oben erläuterten optischen Funktionalitäten verwendet wird, ist in Figur 3 in einer schematischen seitlichen Schnittansicht gezeigt. Diese Positionsmesseinrichtung dient zur Erfassung des Abstands zweier nicht dargestellter Objekte, die mit dem Messreflektor 110 und der Abtasteinheit 120 verbunden und entlang der vertikalen Messrichtung z zueinander verschiebbar angeordnet sind.

Der Messreflektor 110 besteht im gezeigten Ausführungsbeispiel aus einem Trägersubstrat 112, auf dem ein Planspiegel 114 angeordnet ist. Die reflektierende Seite des Planspiegels 114 ist wie aus der Figur ersichtlich in Richtung der Abtasteinheit 120 orientiert.

Auf Seiten der Abtasteinheit 120 ist eine Lichtquelle 121, eine Detektoranordnung 125 mit mehreren optoelektronischen Detektorelementen sowie ein transparenter Trägerkörper 137, z.B. aus Glas, vorgesehen; alternativ wäre als Trägerkörper im Übrigen auch ein geeigneter Hohlkörper verwendbar. Der Trägerkörper 137 besitzt gemäß der Ansicht in Figur 3 einen pyramidenstumpfförmigen Querschnitt. Am Trägerkörper 137 sind eine Reihe optisch-funktionsrelevanter Elemente angeordnet. Zu diesen Elementen gehören ein auf der dem Messreflektor 110 zugewandten Fläche des Trägerkörpers 137 angeordnetes Aufspaltelement 132 und ein Mischgitter 135 sowie vier an den Trägerkörper-Seitenflächen angeordnete Umlenkelemente 133a, 133b, 134a, 134b. Hierbei sind an der linken Seitenfläche des Trägerkörpers 137 ein erstes Umlenkelement 133a und ein zweites Umlenkelement 133b angeordnet, an der rechten Seitenfläche des Trägerkörpers 137 ein drittes Umlenkelement 134a und ein viertes Umlenkelement 134b. Das Aufspaltelement 132 ist ebenso wie das Mischgitter 135 als Transmissionsgitter ausgebildet, als Umlenkelemente 133a, 133b, 134a, 134b fungieren in diesem Ausführungsbeispiel Reflexionsgitter mit geeignet gewählten Gitterperioden, deren reflektierende Flächen in Richtung des Inneren des Trägerkörpers 137 orientiert sind.

Nachfolgend sei der zur Signalerzeugung genutzte Strahlengang des ersten Ausführungsbeispiels der erfindungsgemäßen Positionsmesseinrichtung erläutert. Wie aus Figur 3 ersichtlich, durchtritt das von der Lichtquelle 121 emittierte Strahlenbündel zunächst einen optisch-unwirksamen Bereich 131 auf derjenigen Seite des Trägerkörpers 137, die der Lichtquelle 121 zugewandt ist. Nach dem Durchlaufen des Trägerkörpers 137 gelangt das Strahlenbündel auf das Aufspaltelement 132 und erfährt hier eine Aufspaltung in zwei Teilstrahlenbündel, die wie aus Figur 3 ersichtlich in der yz-Ebene in Richtung des Messreflektors 110 weiterpropagieren und diesen an ersten Auftrefforten ein erstes Mal beaufschlagen. Am Planspiegel 114 des Messreflektors 110 erfahren die Teilstrahlenbündel eine Rückreflexion in Richtung der Abtasteinheit 120, und zwar in Richtung des ersten und zweiten Umlenkelements 133a, 133b. Von diesen Umlenkelementen 133a, 133b werden die Teilstrahlenbündel dann in Richtung des dritten und vierten Umlenkelements 134a, 134b umgelenkt. Über das dritte und vierte Umlenkelement 134a , 134b erfolgt anschließend eine erneute Umlenkung der Teilstrahlenbündel in Richtung des Planspiegels 114 des Messreflektors 110, den die Teilstrahlenbündel an jeweils zweiten Auftrefforten dann ein zweites Mal beaufschlagen. Die zweiten Auftrefforte auf dem Planspiegel 114 können wie im vorliegenden Ausführungsbeispiel gegenüber den ersten Auftrefforten der Teilstrahlenbündel in der angegebenen x-Richtung versetzt sein. Von den zweiten Auftrefforten 114 erfolgt schließlich eine Rückreflexion der Teilstrahlenbündel auf das Mischgitter 135, das wie oben erläutert ausgebildet ist und die erwähnten optischen Funktionalitäten besitzt. Vom Mischgitter 135 aus propagieren dann drei Paare überlagerter, interferierender Teilstrahlenbündel durch den Trägerkörper 137, verlassen diesen durch den optisch-unwirksamen Bereich 136 und gelangen aufgrund der optischen Wirkung des Mischgitters 135 jeweils fokussiert zu den drei vorgesehenen Detektorelementen der Detektoranordnung 125. Neben den bereits erläuterten optischen Funktionalitäten des Mischgitters 135 bezüglich phasenschiebender und fokussierender Wirkung weist das Mischgitter 135 im vorliegenden Fall ferner noch eine Ablenkwirkung senkrecht zur Zeichenebene auf, d.h. die drei Paare von Teilstrahlenbündeln propagieren geneigt in Bezug auf die xz-Ebene in Richtung der Detektorelemente 125. Über die Detektoranordnung 125 sind mehrere phasenverschobene, positionsabhängige Inkrementalsignale bezüglich des Relativversatzes von Messreflektor 110 und Abtasteinheit 120 entlang der Messrichtung z erfassbar.

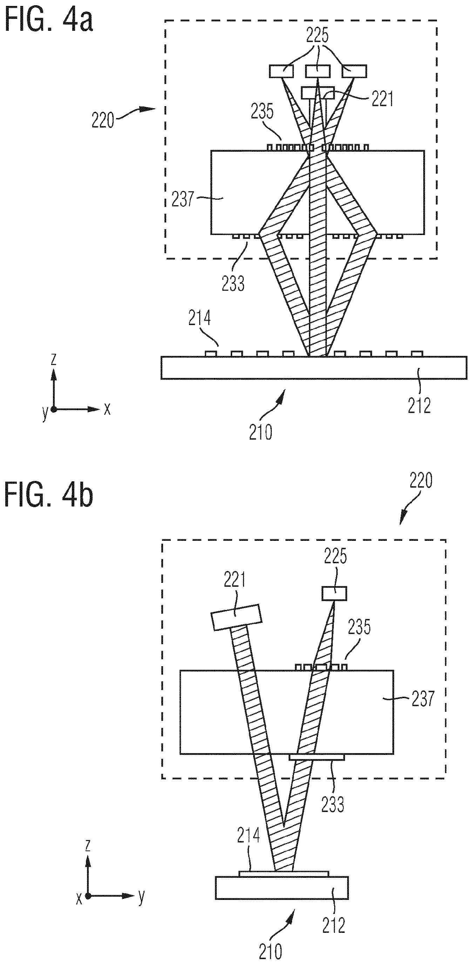

Ein zweites Ausführungsbeispiel der erfindungsgemäßen Positionsmesseinrichtung ist in zwei verschiedenen Schnittansichten in den Figuren 4a und 4b in schematischer Form dargestellt. Dieses Ausführungsbeispiel einer erfindungsgemäßen Positionsmesseinrichtung dient zur Erfassung der Relativbewegung einer Maßverkörperung 210 und einer Abtasteinheit 220 entlang der Messrichtung x; wie aus den Figuren ersichtlich ist die Messrichtung x in diesem Beispiel vertikal orientiert. Mit der Maßverkörperung 210 und der Abtasteinheit 220 sind wiederum zwei mindestens entlang der Messrichtung x beweglich angeordnete Objekte verbunden, die in den Figuren nicht gezeigt sind.

Die Maßverkörperung 210 besteht im vorliegenden Beispiel aus einem sich entlang der Messrichtung x erstreckenden Reflexions-Phasengitter 214, das auf einem Trägersubstrat 212 angeordnet ist. Das Reflexions-Phasengitter 214 umfasst hierbei periodisch entlang der Messrichtung x angeordnete, rechteckförmige Teilungsbereiche mit unterschiedlichen phasenschiebenden Wirkungen auf die darauf einfallenden Strahlenbündel.

Auf Seiten der Abtasteinheit 220 ist eine Lichtquelle 221, mehrere optoelektronische Detektorelemente 225 sowie eine transparente Abtastplatte 237 mit mehreren darauf angeordneten, optisch funktions-relevanten Elementen vorgesehen. Hierzu gehören mehrere auf der Unterseite der Abtastplatte 237 angeordnete Abtastgitter 233 sowie ein auf der Oberseite angeordnetes Mischgitter 235. Als Unterseite wird hierbei diejenige Seite der Abtastplatte 237 bezeichnet, die der Maßverkörperung 10 zugewandt ist; die Oberseite der Abtastplatte 237 ist demzufolge abgewandt zur Maßverkörperung 210 orientiert. Die Abtastgitter 233 sowie das Mischgitter 235 sind jeweils als Transmissions-Phasengitter ausgebildet.

Das von der Lichtquelle 221 emittierte Strahlenbündel durchtritt ohne weitere Ablenkung oder Aufspaltung die Abtastplatte 237 und gelangt auf die Oberseite der Maßverkörperung 210, wo das Reflexions-Phasengitter angeordnet ist. Dort resultiert eine Aufspaltung des einfallenden Strahlenbündels in reflektierte Teilstrahlenbündel +/- 1. Beugungsordnung, die dann wieder zurück in Richtung der Abtasteinheit 210 bzw. der Abtastplatte 237 propagieren. Wie aus der Schnittansicht in Figur 4b ersichtlich, ist in der yz-Ebene der Beugungswinkel der zurückreflektierten Teilstrahlenbündel zur Maßverkörperungs-Normalen betragsmäßig identisch zum Einfallswinkel zur Maßverkörperungs-Normalen; die Maßverkörperung 210 wird in dieser Variante somit unter dem sog. Littrow-Winkel beleuchtet. In der Abtasteinheit 220 treffen die zurückreflektierten Teilstrahlenbündel dann auf die Abtastgitter 233 auf der Unterseite der Abtastplatte 237. Über diese resultiert eine Ablenkung der darauf einfallenden Teilstrahlenbündel zurück zur optischen Achse, so dass die Teilstrahlenbündel auf der Oberseite der Abtastplatte 237 im Bereich des Mischgitters 235 zur interferierenden Überlagerung gelangen; die Teilstrahlenbündel fallen hierbei untersymmetrischen Winkeln auf das Mischgitter 235 ein. Über das Mischgitter 235 resultiert dann zum einen wiederum eine paarweise Überlagerung bestimmter Beugungsordnungen, die dann in Richtung der nachgeordneten Detektorelemente 225 weiterpropagieren. Ferner übernimmt das Mischgitter 235 wie im vorhergehenden Ausführungsbeispiel auch die Fokussierung der Paare von Teilstrahlenbündeln auf die einzelnen Detektorelemente 225.

Wie bereits oben angedeutet, kann aufgrund der Verwendung des entsprechend ausgebildeten Mischgitters 235 trotz großer Strahldurchmesser auf der Maßverkörperung 210 ein lediglich kleiner Spot-Durchmesser auf den Detektorelementen 225 gewährleistet werden. Der große Strahldurchmesser auf der Maßverkörperung 210 stellte eine gute Unempfindlichkeit der Abtastung gegenüber Verschmutzungen sicher, die evtl. auf der Maßverkörperung 210 auftreten können. Desweiteren ist die Verwendung kleiner Detektorelemente möglich, womit ein nur geringes Signalrauschen in den erzeugten Inkrementalsignalen sichergestellt ist.

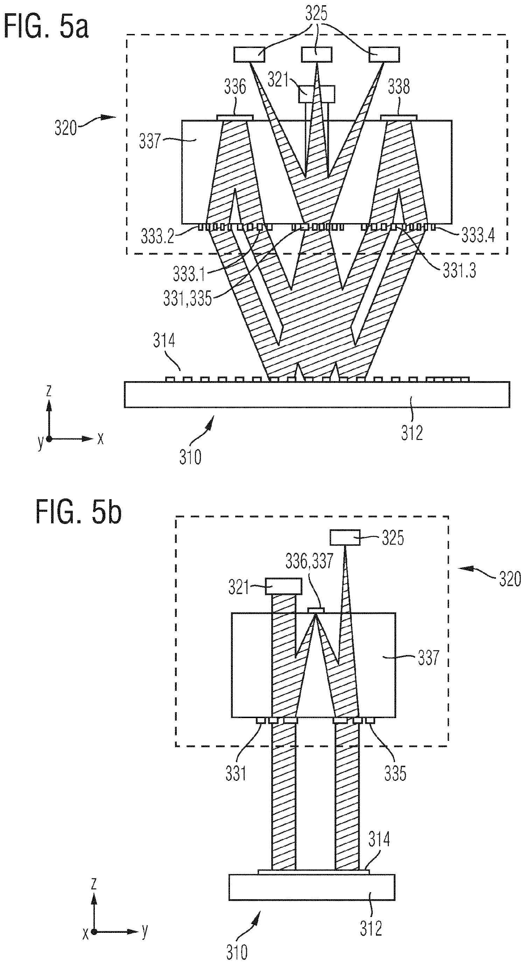

Abschließend sei anhand der Figuren 5a, 5b ein drittes Ausführungsbeispiel der erfindungsgemäßen Positionsmesseinrichtung erläutert; diese ist analog zum vorhergehenden Ausführungsbeispiel in zwei verschiedenen Schnittansichten in den Figuren dargestellt.

Auch dieses Ausführungsbeispiel einer erfindungsgemäßen Positionsmesseinrichtung dient wie das vorhergehende Ausführungsbeispiel zur Erfassung der Relativbewegung zweier beweglicher Objekte entlang einer vertikalen Messrichtung, die in den Figuren 5a, 5b wiederum mit x bezeichnet ist.

Analog zum zweiten Ausführungsbeispiel ist hierbei die Maßverkörperung 310 ausgebildet, die wiederum aus einem sich entlang der Messrichtung x erstreckenden Reflexions-Phasengitter 314 besteht, das auf einem Trägersubstrat 312 angeordnet ist.

In der Abtasteinheit 320 ist eine Lichtquelle 321, mehrere Detektorelemente 325 sowie eine transparente Abtastplatte 337 mit mehreren darauf angeordneten, optisch funktions-relevanten Elementen vorgesehen. Hierzu gehören mehrere auf der Unterseite der Abtastplatte 237 angeordnete Gitter, nämlich ein Aufspaltgitter 331, mehrere Abtastgitter 333.1 - 333.4 und ein Mischgitter 335; diese Gitter sind jeweils als Transmissions-Phasengitter ausgebildet. Auf der Oberseite der Abtastplatte 237 sind zwei Reflektorelemente 336, 338, angeordnet, deren reflektierende Seite jeweils in Richtung der Maßverkörperung 310 orientiert ist.

Das von der Lichtquelle 321 emittierte Strahlenbündel durchläuft zunächst die Abtastplatte 337, bis es auf das auf der Unterseite angeordnete Aufspaltgitter 331 gelangt. Dort resultiert eine Aufspaltung in zwei Teilstrahlenbündel, die dann weiter in Richtung der Maßverkörperung 310 propagieren. Vom Reflexions-Phasengitter 314 der Maßverkörperung 310 erfolgt eine Rückreflexion in Richtung der Abtasteinheit 310. Dort durchlaufen die Teilstrahlenbündel dann die Abtastgitter 333.2, 333.4, über die eine Ablenkung in -y-Richtung sowie eine Fokussierung auf die Reflektorelemente 336, 338 auf der Abtastplatten-Oberseite resultiert. Von den Reflektorelementen 336, 338 werden die Teilstrahlenbündel dann zurück zu weiteren Abtastgittern 333.1, 333.3 auf der Unterseite der Abtastplatte 337 reflektiert. Über diese Abtastgitter 333.1, 333.2 werden die Teilstrahlenbündel dann kollimiert und erneut abgelenkt, so dass sie in der xz-Ebene schließlich senkrecht ein weiteres Mal auf die Maßverkörperung 310 einfallen. Nach der erneuten Rückreflexion gelang die Teilstrahlenbündel dann auf das Mischgitter 335 an der Unterseite der Abtastplatte 337 , das dann die bereits oben erläuterten optischen Wirkungen auf die Teilstrahlenbündel ausübt. Es propagieren sodann Paare von interferierenden Teilstrahlenbündeln fokussiert auf die nachgeordneten Detektorelemente 325, über die die phasenverschobenen Inkrementalsignale erzeugt werden.

Neben den konkret beschriebenen Ausführungsbeispielen existieren im Rahmen der vorliegenden Erfindung selbstverständlich noch weitere Ausgestaltungsmöglichkeiten.

So können z.B. auch Abtaststrahlengänge in der erfindungsgemäßen Positionsmesseinrichtung vorgesehen sein, bei denen die zu überlagernden Teilstrahlenbündel nicht unter symmetrischen Einfallswinkeln auf das Mischgitter einfallen, wie dies eingangs in den Figuren 1a, 1b vorgesehen war. Selbstverständlich kann auch für derartige Varianten ein Mischgitter in der erläuterten Art und Weise ausgebildet werden, das neben der Einstellung von definierten Phasenbeziehungen für die verschiedenen Teilstrahlenbündel auch eine Fokussierung auf die Detektorelemente gewährleistet.

Ferner ist es möglich, dass die erfindungsgemäße Positionsmesseinrichtung nicht nur zur Erfassung von Verschiebebewegungen entlang linearer Messrichtungen eingesetzt wird; es können auch Positionsmesseinrichtungen ausgebildet werden, die rotatorische Relativbewegungen zweier Objekte erfassen usw..

**Patentansprüche**

1.  Optische Positionsmesseinrichtung zur interferentiellen Bestimmung des Relativabstands von zwei Objekten, die entlang mindestens einer Messrichtung zueinander beweglich sind, wobei ein von einer Lichtquelle emittiertes Strahlenbündel in mindestens zwei Teilstrahlenbündel aufgespalten wird, die anschließend auf getrennten Strahlwegen ein oder mehrere Gitter beaufschlagen und dabei abstandsabhängige Phasenverschiebungen erfahren, **dadurch gekennzeichnet,**

    - **dass** die Teilstrahlenbündel (TS_A, TS_B) an einem Mischgitter (MG; 135; 235; 335) überlagert werden und dann mindestens drei Paare interferierender Teilstrahlenbündel (TS_A, TS_B) in verschiedene Raumrichtungen propagieren, wobei über das Mischgitter (MG; 135; 235; 335) ferner eine Fokussierung jedes Paares mit interferierenden Teilstrahlenbündeln (TS_A, TS_B) auf ein Detektorelement (D1, D2, D3; 125; 225; 325) erfolgt, so dass über die Detektorelemente (D1, D2, D3; 125; 225; 325) mindestens drei positionsabhängige, phasenverschobene Inkrementalsignale erfassbar sind, und
    - **dass** das Mischgitter (MG; 135; 235; 335) als n-stufiges Transmissions-Phasengitter ausgebildet ist, für dessen Stufenhöhe (h) gilt:

$$h = \lambda \, / \, (n \cdot (n1 - n2))$$

    mit:

    h := Stufenhöhe
    λ := Lichtwellenlänge
    n := 2, 3, 4, .....
    n1 := Brechungsindex der Gitterstege
    n2 := Brechungsindex der Gitterlücken.

2.  Optische Positionsmesseinrichtung nach Anspruch 1, **dadurch gekennzeichnet, dass** zwei auf das Mischgitter (MG; 135; 235; 335) einfallende Teilstrahlenbündel (TS_A, TS_B) mindestens eine Beugung in 0., +/- 1. und +/- 2. Beugungsordnung erfahren und in Richtung der Detektorelemente (D1, D2, D3; 125; 225; 325) paarweise interferierende Teilstrahlenbündel 0./-2. Beugungsordnung, +1./-1. Beugungsordnung und 0./+2 Beugungsordnung propagieren.

3.  Optische Positionsmesseinrichtung nach Anspruch 1, **dadurch gekennzeichnet, dass** das Mischgitter (MG; 135; 235; 335) als n-stufiges Transmissions-Phasengitter ausgebildet ist, welches eine Phasenfunktion φ (x, y) gemäß

$$\varphi(x,y) = \frac{2\pi}{n} Round\left(\frac{n * atan2(Im(T(x,y)), Re(T(x,y)))}{2\pi}\right)$$

besitzt, mit:

φ (x, y) := Phasenfunktion des Transmissions-Phasengitters
x, y := Ortskoordinaten in der Ebene des Transmissions-Phasengitters
n := 2, 3, 4,...; Anzahl der Stufen des Transmissions-Phasengitters
T (x, y) := Transmissionsfunktion des Mischgitters

**4.** Optische Positionsmesseinrichtung nach mindestens einem der vorhergehenden Ansprüche, **dadurch gekennzeichnet, dass**

- eines der beiden Objekte mit einem planen Messreflektor (110) verbunden ist,
- das andere Objekt mit einer Abtasteinheit (120) verbunden und entlang einer Messrichtung (z) relativ beweglich zum Messreflektor (110) angeordnet ist, wobei die Messrichtung (z) senkrecht zum Messreflektor (110) orientiert ist und
- wobei die Abtasteinheit (120) folgende Komponenten aufweist:

- mindestens eine Lichtquelle (121),
- mehrere Detektorelemente (125),
- das Mischgitter (135),
- mehrere Umlenkelemente (133a, 133b, 134a, 134b), die jeweils als eindimensionales Reflexionsgitter ausgebildet sind sowie
- mindestens ein Aufspaltelement (132), welches als eindimensionales Transmissionsgitter ausgebildet ist.

**5.** Vorrichtung nach Anspruch 4, **dadurch gekennzeichnet, dass** die Abtasteinheit (120) einen transparenten Trägerkörper (137) mit pyramidenstumpfförmigem Querschnitt aufweist, an dessen dem Messreflektor (110) zugewandten Fläche das Aufspaltelement (132) angeordnet ist und an dessen Seitenflächen die mindestens vier Umlenkelemente (133a, 133b, 134a, 134b) angeordnet sind.

**6.** Vorrichtung nach Anspruch 4, **dadurch gekennzeichnet, dass** die verschiedenen Komponenten derart ausgebildet und angeordnet sind, dass

- das von der Lichtquelle (121) emittierte Strahlenbündel am Aufspaltelement (132) eine Aufspaltung in zwei Teilstrahlenbündel erfährt und die beiden Teilstrahlenbündel in Richtung des Messreflektors (110) propagieren,
- vom Messreflektor (110) eine Rückreflexion der Teilstrahlenbündel in Richtung der ersten und zweiten Umlenkelemente (133a, 133b) in der Abtasteinheit (120) erfolgt, wo eine Umlenkung der Teilstrahlenbündel in Richtung der dritten und vierten Umlenkelemente (134a, 134b) resultiert und
- über die dritten und vierten Umlenkelemente (134a, 134b) eine Umlenkung der Teilstrahlenbündel zum Messreflektor (110) erfolgt,
- von dem aus eine Rückreflexion der Teilstrahlenbündel in Richtung des Mischgitters (135) in der Abtasteinheit (120) resultiert, an dem eine Überlagerung der Teilstrahlenbündel erfolgt und dann drei Paare interferierender Teilstrahlenbündel in verschiedenen Raumrichtungen auf drei Detektorelemente (125) fokussiert werden.

**7.** Optische Positionsmesseinrichtung nach mindestens einem der Ansprüche 1 - 3, **dadurch gekennzeichnet, dass**

- eines der beiden Objekte mit einer Maßverkörperung (210; 310) verbunden ist,
- das andere Objekt mit einer Abtasteinheit (220; 320) verbunden und entlang einer Messrichtung (x) relativ beweglich zur Maßverkörperung (210; 310) angeordnet ist, wobei die Messrichtung (x) parallel zur Maßverkörperungsebene orientiert ist und
- wobei die Abtasteinheit (220; 320) folgende Komponenten aufweist:

- mindestens eine Lichtquelle 221; 321,
- mehrere Detektorelemente (225; 325),
- das Mischgitter (235; 335),
- mehrere Abtastgitter (233; 333.1, 333.2, 333.3, 333.4), die jeweils als eindimensionales Transmissionsgitter ausgebildet sind.

**8.** Optische Positionsmesseinrichtung nach Anspruch 7, **dadurch gekennzeichnet, dass** die Abtasteinheit (220; 320) ferner eine transparente Abtastplatte (237; 337) aufweist, auf deren Ober- und/oder Unterseite das Mischgitter (235;

335) und/oder die Abtastgitter (233; 333.1, 333.2, 333.3, 333.4) angeordnet sind.

9. Optische Positionsmesseinrichtung nach Anspruch 8, **dadurch gekennzeichnet, dass** auf der Oberseite der Abtastplatte (337) ein oder mehrere Reflektorelemente (336, 338) angeordnet sind, deren reflektierende Seite jeweils in Richtung der Maßverkörperung (310) orientiert ist und auf der Unterseite das Mischgitter (335) sowie die Abtastgitter (333.1, 333.2, 333.3, 333.4) angeordnet sind.

**Claims**

1. Optical position measuring device for determining, by interference, the relative distance between two objects that are movable relative to one another along at least one measurement direction, wherein a beam emitted by light source is split into at least two partial beams, which subsequently impinge on one or more gratings along separate beam paths and, in the process, experience distance-dependent phase shifts,

   **characterized**

   - **in that** the partial beams (TS_A, TS_B) are overlaid at a mixing grating (MG; 135; 235; 335) and subsequently at least three pairs of interfering partial beams (TS_A, TS_B) propagate in different spatial directions, wherein the mixing grating (MG; 135; 235; 335) furthermore brings about focusing of each pair with interfering partial beams (TS_A, TS_B) on a detector element (D1, D2, D3; 125; 225; 325) such that at least three position-dependent, phase-shifted incremental signals are capturable by way of the detector elements (D1, D2, D3; 125; 225; 325) and
   - the mixing grating (MG; 135; 235; 335) is embodied as n-step transmission phase grating, the following applying to the step height (h) thereof:

$$h = \lambda/(n \cdot (n1 - n2)),$$

   where:

   h := step height
   $\lambda$ := light wavelength
   n := 2, 3, 4, ...
   n1 := refractive index of the grating webs
   n2 := refractive index of the grating gaps.

2. Optical position measuring device according to Claim 1, **characterized in that** two partial beams (TS_A, TS_B) incident on the mixing grating (MG; 135; 235; 335) experience at least one diffraction into the $0^{th}$, $+/-1^{st}$ and $+/-2^{nd}$ order of diffraction and pairwise interfering partial beams of the $0^{th}/-2^{nd}$ order of diffraction, $+1^{st}/-1^{st}$ order of diffraction and $0^{th}/+2^{nd}$ order of diffraction propagate in the direction of the detector elements (D1, D2, D3; 125; 225; 325).

3. Optical position measuring device according to Claim 1, **characterized in that** the mixing grating (MG; 135; 235; 335) is embodied as a n-step transmission phase grating, which has a phase function $\varphi(x, y)$ as per

$$\varphi(x,y) = \frac{2\pi}{n} Round\left(\frac{n * atan2(Im(T(x,y), Re(T(x,y)))}{2\pi}\right)$$

   where:

   $\varphi(x, y)$ := phase function of the transmission phase grating,
   x, y := spatial coordinates in the plane of the transmission phase grating,
   n := 2, 3, 4, ...; number of steps of the transmission phase grating, and
   T(x, y) := transmission function of the mixing grating.

4. Optical position measuring device according to at least one of the preceding claims, **characterized in that**

- one of the two objects is connected to a plane measuring reflector (110),
- the other object is connected to a scanning unit (120) and arranged so as to be movable relative to the measuring reflector (110) along one measuring direction (z), wherein the measuring direction (z) is oriented perpendicular to the measuring reflector (110), and
- wherein the scanning unit (120) comprises the following components:

  - at least one light source (121),
  - a plurality of detector elements (125),
  - the mixing grating (135),
  - a plurality of deflection elements (133a, 133b, 134a, 134b), each of which are embodied as a one-dimensional reflection grating, and
  - at least one splitting element (132), which is embodied as a one-dimensional transmission grating.

5. Apparatus according to Claim 4, **characterized in that** the scanning unit (120) has a transparent carrying body (137) with a pyramidal frustum-shaped cross section, the splitting element (132) being arranged on the face thereof facing the measuring reflector (110) and the at least four deflection elements (133a, 133b, 134a, 134b) being arranged at the side faces thereof.

6. Apparatus according to Claim 4, **characterized in that** the various components are embodied and arranged in such way that

  - the beam emitted by the light source (121) experiences splitting into two partial beams at the splitting element (132) and the two partial beams propagate in the direction of the measuring reflector (110),
  - there is a back-reflection of the partial beam from the measuring reflector (110) in the direction of the first and second deflection elements (133a, 133b) of the scanning unit (120) where there is a deflection of the partial beams in the direction of the third and fourth deflection elements (134a, 134b), and
  - there is a deflection of the partial beams to the measuring reflector (110) via the third and fourth deflection elements (134a, 134b),
  - there is a back-reflection of the partial beams in the direction of the mixing grating (135) in the scanning unit (120) where there is a superposition of the partial beams and then three pairs interfering partial beams are focused on three detector elements (125) in different spatial directions.

7. Optical position measuring device according to at least one of Claims 1 to 3, **characterized in that**

  - one of the two objects is connected to a material measure (210; 310),
  - the other object is connected to a scanning unit (220; 330) and arranged so as to be movable relative to the material measure (210; 310) along a measuring direction (x), when the measuring direction (x) is oriented parallel to the material measure plane, and
  - wherein the scanning unit (220; 320) comprises the following components:

  - at least one light source (221; 321),
  - a plurality of detector elements (225; 325),
  - the mixing grating (235; 335),
  - a plurality of scanning gratings (233; 333.1, 333.2, 333.3, 333.4), each of which are embodied as a one-dimensional transmission grating.

8. Optical position measuring device according to Claim 7, **characterized in that** the scanning unit (220; 320) further has a transparent scanning plate (237; 337), on the upper and/or lower side of which the mixing grating (235; 335) and/or the scanning gratings (233; 333.1, 333.2, 333.3, 333.4) are arranged.

9. Optical position measuring device according to Claim 8, **characterised in that** one or more reflector elements (336, 338) are arranged on the upper side of the scanning plate (337), the reflecting side of said reflector elements each being oriented in the direction of the material measure (310), and the mixing grating (335) and scanning gratings (333.1, 333.2, 333.3, 333.4) are arranged on the lower side.

**Revendications**

1. Dispositif optique de mesure de position pour la détermination interférentielle de la distance relative de deux objets qui sont mobiles l'un par rapport à l'autre le long d'au moins une direction de mesure, dans lequel un faisceau de rayons émis par une source de lumière est divisé en au moins deux faisceaux de rayons partiels qui sollicitent ensuite une ou plusieurs grilles sur des trajectoires de rayon séparées et subissent alors des déphasages en fonction de la distance,
**caractérisé en ce que**

   - les faisceaux de rayons partiels (TS_A, TS_B) sont superposés au niveau d'une grille d'injection (MG ; 135 ; 235 ; 335) et propagent ensuite au moins trois paires de faisceaux de rayons partiels (TS_A, TS_B) en interférence dans différentes directions spatiales, dans lequel la grille d'injection (MG ; 135 ; 235 ; 335) permet en outre d'effectuer une focalisation de chaque paire avec des faisceaux de rayons partiels (TS_A, TS_B) en interférence sur un élément de détecteur (D1, D2, D3 ; 125 ; 225 ; 325) de sorte que les éléments de détecteur (D1, D2, D3 ; 125 ; 225 ; 325) permettent de détecter au moins trois signaux incrémentaux déphasés, dépendants de la position, et
   - la grille d'injection (MG ; 135 ; 235 ; 335) est réalisée comme un réseau de phase à transmission à n niveaux :

$$h = \lambda \; / \; (n \cdot (n1 - n2))$$

s'appliquant à la hauteur de niveau (h), où :

   h := hauteur de niveau
   $\lambda$ := longueur d'onde de la lumière
   n := 2, 3, 4, ...
   n1 := indice de réfraction des ondulations de: réseau
   n2 := indice de réfraction des lacunes de réseau.

2. Dispositif optique de mesure de position selon la revendication 1, **caractérisé en ce que** deux faisceaux de rayons partiels (TS_A, TS_B) incidents sur la grille d'injection (MG ; 135 ; 235 ; 335) subissent au moins une diffraction de l'ordre de diffraction 0, +/-1 et +/-2, et des faisceaux de rayons partiels en interférence par paires, de l'ordre de diffraction 0/-2, de l'ordre de diffraction +1/-1 et de l'ordre de diffraction 0/+2 se propagent en direction des éléments de détecteur (D1, D2, D3 ; 125 ; 225 ; 325).

3. Dispositif optique de mesure de position selon la revendication 1, **caractérisé en ce que** la grille d'injection (MG ; 135 ; 235 ; 335) est réalisée comme un réseau de phase à transmission à n niveaux qui possède une fonction de phase $\varphi(x, y)$ selon

$$\varphi(x,y) = \frac{2\pi}{n} Round\left(\frac{n * atan2(1m(T(x,y)), Re(T(x,y)))}{2\pi}\right)$$

où :

   $\varphi(x, y)$ := la fonction de phase du réseau de phase à transmission
   x, y := les coordonnées géométriques dans le plan du réseau de phase à transmission
   n := 2, 3, 4, ... ; le nombre des niveaux du réseau de phase à transmission
   T(x, y) := la fonction de transmission de la grille d'injection.

4. Dispositif optique de mesure de position selon au moins l'une des revendications précédentes, **caractérisé en ce que**

   - l'un des deux objets est relié à un réflecteur de mesure plan (110),
   - l'autre objet est relié à une unité de palpage (120) et est disposé le long d'une direction de mesure (z) de manière mobile par rapport au réflecteur de mesure (110), la direction de mesure (z) étant orientée perpendiculairement au réflecteur de mesure (110), et
   - dans lequel l'unité de palpage (120) présente les composants suivants :

- au moins une source de lumière (121),
- plusieurs éléments de détecteur (125),
- la grille d'injection (135),
- plusieurs éléments de déviation (133a, 133b, 134a, 134b) qui sont réalisés respectivement sous la forme d'un réseau à réflexion unidimensionnel, et
- au moins un élément de division (132) qui est réalisé comme un réseau à transmission unidimensionnel.

5. Dispositif selon la revendication 4, **caractérisé en ce que** l'unité de palpage (120) présente un corps de support transparent (137) ayant une section transversale en forme de pyramide tronquée sur la surface duquel, tournée vers le réflecteur de mesure (110), est disposé l'élément de division (132), et sur les surfaces latérales duquel sont disposés les au moins quatre éléments de déviation (133a, 133b, 134a, 134b).

6. Dispositif selon la revendication 4, **caractérisé en ce que** les différents composants sont réalisés et disposés de telle sorte que

- le faisceau de rayons émis par la source de lumière (121) subit au niveau de l'élément de division (132) une division en deux faisceaux de rayons partiels, et les deux faisceaux de rayons partiels se propagent en direction du réflecteur de mesure (110),
- une rétroréflexion des faisceaux de rayons partiels a lieu à partir du réflecteur de mesure (110) dans la direction du premier et du deuxième élément de déviation (133a, 133b) dans l'unité de palpage (120), où il en résulte une déviation des faisceaux de rayons partiels dans la direction du troisième et du quatrième élément de déviation (134a, 134b), et
- le troisième et le quatrième élément de déviation (134a, 134b) effectuent une déviation des faisceaux de rayons partiels vers le réflecteur de mesure (110),
- d'où il résulte une rétroréflexion des faisceaux de rayons partiels en direction de la grille d'injection (135) dans l'unité de palpage (120), au niveau de laquelle une superposition des faisceaux de rayons partiels a lieu, et ensuite, trois paires de faisceaux de rayons partiels en interférence sont focalisées dans différentes directions spatiales sur trois éléments de détecteur (125).

7. Dispositif optique de mesure de position selon au moins l'une des revendications 1 à 3, **caractérisé en ce que**

- l'un des deux objets est relié à un étalon (210 ; 310),
- l'autre objet est relié à une unité de palpage (220 ; 320) et disposé le long d'une direction de mesure (x) de manière mobile par rapport à l'étalon (210 ; 310), la direction de mesure (x) étant orientée en parallèle au plan d'étalon, et
- dans lequel l'unité de palpage (220 ; 320) présente les composants suivants :

- au moins une source de lumière 221 ; 321,
- plusieurs éléments de détecteur (225 ; 325),
- la grille d'injection (235 ; 335),
- plusieurs réseaux de palpage (233 ; 333.1, 333.2, 333.3, 333.4) qui sont respectivement réalisés sous forme de réseau à transmission unidimensionnel.

8. Dispositif optique de mesure de position selon la revendication 7, **caractérisé en ce que** l'unité de palpage (220 ; 320) présente en outre une plaque de palpage transparente (237 ; 337) sur la face supérieure et/ou inférieure de laquelle sont disposées la grille d'injection (235 ; 335) et/ou les réseaux de palpage (233 ; 333.1, 333.2, 333.3, 333.4).

9. Dispositif optique de mesure de position selon la revendication 8, **caractérisé en ce que** sur la surface supérieure de la plaque de palpage (337), un ou plusieurs éléments de réflecteur (336, 338) sont disposés dont la face réfléchissante est respectivement orientée en direction de l'étalon (310) et sur la face inférieure, la grille d'injection (335) ainsi que les grilles de palpage (333.1, 333.2, 333.3, 333.4) sont disposées.

## FIG. 1a

TS_B

MG

0/+2

D1

$\alpha_1$

$-\alpha_1$

N

D2

+1/-1

0/-2

D3

TS_A

f

x
y → z

## FIG. 1b

MG

TS_A, TS_B

D1, D2, D3

N

f

y
x → z

## FIG. 2a

$G_M$

$d_M$

y
z → x

| | | | |
|---|---|---|---|
| 0° | 90° | 180° | 270° |

## FIG. 2b

$G_L$

y
z → x

| | | | |
|---|---|---|---|
| 0° | 90° | 180° | 270° |

## FIG. 2c

## FIG. 2d

FIG. 3

## FIG. 4a

## FIG. 4b

FIG. 5a

FIG. 5b

# FIG. 1a

TS_B

MG

0/+2

D1

α₁

N

+1/-1

D2

-α₁

0/-2

f

D3

TS_A

X

y ● → z

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 163362 A1
- DE 102013206693 A1
- DE 102008007319 A1
- EP 2765394 A2